# EUROPÄISCHE PATENTSCHRIFT

(11) **EP 4 227 273 B1**
(45) Veröffentlichungstag und Bekanntmachung des Hinweises auf die Patenterteilung: **23.07.2025**
(21) Anmeldenummer: 22156510.4
(22) Anmeldetag: 14.02.2022
(51) Int. Cl.: C03B 37/012, C03B 37/014

(54) **VERFAHREN UND ZWISCHENPRODUKT ZUR HERSTELLUNG EINER MEHRKERNFASER MIT EINEM MARKER**
METHOD AND INTERMEDIATE PRODUCT FOR PRODUCING A MULTICORE FIBRE WITH A MARKER
PROCÉDÉ ET PRODUIT INTERMÉDIAIRE DESTINÉS À LA FABRICATION D'UNE FIBRE MULTICOEURS DOTÉE D'UN MARQUEUR

(43) Veröffentlichungstag der Anmeldung: 16.08.2023
(73) Patentinhaber: Heraeus Quarzglas GmbH & Co. KG, 63450 Hanau (DE)
(72) Erfinder: Dr. Tiess, Tobias, 06803 Bitterfeld-Wolfen (DE); Dr. Schuster, Kay, 06803 Bitterfeld-Wolfen (DE); Dr. Hünermann, Michael, 63801 Kleinostheim (DE)
(74) Vertreter: Heraeus IP

(56) Entgegenhaltungen:
- US-A1- 2016 075 590
- US-A1- 2022 003 921

## Beschreibung

### Technischer Hintergrund

Die vorliegende Erfindung betrifft ein Verfahren zur Herstellung einer Mehrkernfaser mit einer Markerzone oder einer Vorform für eine derartige Mehrkernfaser, umfassend die Bildung eines Halbzeugs, das einen Mantelglasbereich aus einem Mantelglas mit mehreren darin eingebetteten Kernglasbereichen aus einem Kernglas und mindestens ein Markerelement aufweist, wobei durch Elongieren des Halbzeugs die Mehrkernfaser beziehungsweise die Vorform erhalten wird, und wobei das Erzeugen des Mantelglasbereichs einen Verfahrensschritt umfasst, bei dem anhand eines Außenabscheideverfahrens auf einer Außenmantel eines eine Targetstab-Längsachse aufweisenden Targetstabs eine Mantelmaterialschicht abgeschieden wird, wobei der Targetstab einen sich entlang der Targetstab-Längsachse erstreckenden ersten Glasbereich aufweist und wobei das Halbzeug die Mantelmaterialschicht und den Targetstab umfasst.

Außerdem betrifft die Erfindung ein Zwischenprodukt zur Herstellung einer Mehrkernfaser oder einer Vorform dafür, umfassend einen Targetstab aus Glas, ein Markerelement und eine SiO₂-Soot enthaltende Mantelmaterialschicht, die den Targetstab und das Markerelement umgibt und die mit dem Targetstab reib-, form- und/oder stoffschlüssig verbunden ist.

Bei Mehrkernfasern sind mehrere lichtwellenleitende, optische Kernbereiche (im Folgenden auch als "Signalkerne" bezeichnet) in einer gemeinsamen Faser integriert. Die Signalkerne erstrecken sich entlang der Faserlängsachse. Sie sind von Mantelmaterial mit geringerem Brechungsindex umgeben und ermöglichen eine im Wesentlichen voneinander unabhängige Lichtführung. Dieses Faser-Design verspricht eine hohe Kapazität der Signalübertragung, weil in einer einzigen optischen Faser zusammengefasst unterschiedliche Signale simultan in jedem der räumlich getrennten Signalkerne übertragen werden können. Diese Methode der Signalübertragung wird auch als "räumliches Multiplexing" bezeichnet, was insbesondere die Daten-Übertragungskapazität in der optischen Telekommunikation erhöhen kann. Mehrkernfasern gelten außerdem als Bestandteil faseroptischer Sensoren in der Mess- und Medizintechnik sowie für Beleuchtungs- und Abbildungszwecke in mikroskopischen oder endoskopischen Geräten.

### Stand der Technik

Mehrkernfasern werden durch Elongieren einer massiven Vorform oder eines Ensembles von Bauteilen erzeugt. Diese bestehen häufig aus synthetisch erzeugtem Quarzglas (SiO₂), das dotiert oder undotiert sein kann. Die Herstellung von synthetischem Quarzglas umfasst beispielsweise Plasma- oder CVD-Abscheidemethoden, die unter den Bezeichnungen OVD-, VAD-, MCVD-, PCVD- oder FCVD-Verfahren bekannt sind. Dabei wird eine flüssige oder gasförmige siliziumhaltige Ausgangssubstanz einer chemischen Reaktion (Hydrolyse, Pyrolyse oder Oxidation) unterzogen und das Reaktionsprodukt - teilchenförmiges SiO₂ - als Feststoff aus der Gasphase auf einer Ablagerungsfläche abgeschieden. Die Ausgangssubstanz ist beispielsweise Siliciumtetrachlorid (SiCl₄) oder eine chlorfreie Siliziumverbindung wie etwa ein Polyalkylsiloxan. Die Reaktionszone ist beispielsweise ein Ofen, eine Brennerflamme oder ein Lichtbogen (Plasma).

Beim sogenannten "Stack-and-Draw-Verfahren" werden Kernstäbe und Glaszylinder unterschiedlicher Durchmesser so zusammengestapelt, dass sie eine relativ hohe Packungsdichte ergeben und eine gewisse Symmetrie aufweisen. Die zylinderförmigen Bauteile werden in ein Hüllrohr eingeführt und darin räumlich fixiert. Dieses Ensemble wird zu der Mehrkernfaser gezogen oder es wird vorab zu einer Vorform weiterverarbeitet, aus der anschließend die Mehrkernfaser gezogen wird. Diese Methode ist beispielsweise in der US 6,154,594 A beschrieben.

Das "Stack-and-Draw-Verfahren" erfordert einen hohen Justageaufwand und es führt leicht zu Maßhaltigkeitsfehlern und zum Eintrag von Verunreinigungen infolge des großen Anteils freier Bauteil-Oberflächen. Zudem weist die elongierte Vorform wegen Unterschieden in der radialen Packungsdichte häufig unterschiedliche Radiuswerte in azimutaler Richtung auf, die durch Rundschleifen ausgeglichen werden müssen.

Bei dem aus der US 2015/0307387 A1 bekannten Verfahren wird eine Vorform für Mehrkernfasern erzeugt, indem Durchgangslöcher in ein stabförmiges Basismaterial aus Glas gebohrt werden, in die anschließend Kernglasstäbe eingeführt werden. Als Basiskörper wird ein Mantelglas-Hohlzylinder in Form eines nach dem OVD-Verfahren erzeugten Sootkörpers auf Basis von SiO₂ verwendet (SiO₂-Sootkörper). Beim OVD-Verfahren ist die Ablagerungsfläche im Allgemeinen der Außenmantel eines um seine Längsachse rotierenden stab- oder rohrförmigen Abscheidedorns. Durch reversierende Hin- und Herbewegung der Reaktionszone wird ein im Wesentlichen zylinderförmiger Sootkörper abgeschieden. Nach Abschluss des Abscheideprozesses wird der Abscheidedorn entfernt, so dass eine zentrale Mittenbohrung in der Mittelachse des zylinderförmigen Sootkörpers verbleibt. In den Mantelglas-Hohlzylinder werden Längsbohrungen zur Aufnahme der Kernglasstäbe eingebracht. Außerdem wird im randnahen Bereich des Mantelglas-Hohlzylinders durch mechanisches Bohren eine weitere Längsbohrung zur Aufnahme eines Markerelements in Form eines Markerstabs erzeugt.

Der Markerstab wird beim Ziehen der Mehrkernfaser zu einer Markerzone elongiert. Die Markerzone dient insbesondere bei symmetrischen Faserdesigns zur Symmetriebrechung, um die Signalkerne der Mehrkernfaser identifizieren und hinsichtlich ihrer Positionen zueinander und in Bezug zur Faser-Mittelachse eindeutig zuordnen zu können. Die Identifizierung und Zuordnung der Signalkerne ist beispielsweise erforderlich, damit zwei Mehrkernfasern über ihre Stirnseiten mittels herkömmlicher Spleißmethoden dämpfungsarm und mit und korrekt zugeordneten Signalkernen zusammengefügt werden können.

Die US 2016/075590 A1 betrifft die Herstellung einer Mehrkernfaser durch Ziehen aus einer Vorform. Die Vorform weist einen Mantelglasbereich, mehrere Kernstäbe und ein stabförmiges Markerelement auf. Die Kernstäbe enthalten einen Kernglasbereich, der von einem inneren Mantelglas umgeben ist. Die Kernstäbe werden mit parallel zueinander verlaufenden Längsachsen in einer Glasdrehbank angeordnet und die Zwischenbereiche werden anhand eines Außenabscheideverfahrens mit SiO₂-Soot aufgefüllt. Dabei wird auch das Markerelement eingebettet. Das SiO₂-Sootmaterial bildet nach dem Verglasen einen Mantelglasbereich aus einem äußeren Mantelglas, das die Kernstäbe und das Markerelement, das sich in seinem Brechungsindex oder seiner Farbe vom äußeren Mantelglas unterscheidet, umgibt.

Aus der US 2022/0003921 A1 ist ein weiteres Verfahren zur Herstellung einer Mehrkernfaser durch Ziehen aus einer Vorform bekannt. Bei einer Verfahrensweise wird eine Vorform mit einem Markerstab und mit vier Kernstäben hergestellt. Die Kernstäbe enthalten einen Kernglasbereich, der von einem inneren Mantelglas umgeben ist. Sie sind in einem Zylinder aus einem äußeren Mantelglas eingebettet und gleichmäßig um die Zylinder-Mittelachse verteilt. Das äußere Mantelglas hat eine niedrigere Erweichungstemperatur als das innere Mantelglas. Die Kernstäbe und das äußere Mantelglas können anhand eines Außenabscheideverfahrens erzeugt werden. Der Mantelglas-Zylinder wird mit einer zentralen Bohrung versehen, an die vier Bohrungen zur Aufnahme der Kernstäbe direkt angrenzen, so dass alle Bohrungen ein gemeinsame Längsöffnung bilden. In das Zentrum der Längsöffnung wird ein Stab mit quadratischem Querschnitt eingesetzt, der aus dem äußeren Mantelglas besteht. In den Spalt zwischen diesem Mantelglas-Stab und einem der Kernstäbe wird der Markerstab eingesetzt. Beim Erhitzen des Ensembles aus Mantelglas-Zylinder, Kernstäben und Markerstab erweicht das äußere Mantelglas und schließt die Lücken im Bereich der Längsöffnung.

### Technische Aufgabe

Die Herstellung von Mantelglas-Hohlzylindern anhand von Außenabscheideverfahren, insbesondere nach dem OVD-Verfahren, ist kostengünstig im Vergleich zu anderen Herstellungsmethoden, insbesondere im Vergleich zum VAD-Verfahren (Vapor Phase Axial Deposition). Sie hat allerdings den Nachteil, dass nach dem Entfernen des Abscheidedorns die zentrale Mittenbohrung verbleibt, die beim Kollabieren zu mechanischen Spannungen und zu asymmetrischen Verformungen führen und das Faser-Design zerstören kann. Außerdem verringert sich durch Kollabieren die Querschnittsfläche des Mantelglasanteils. Diese Nachteile können durch Einsetzen eines die Mittenbohrung verschließenden Füllstabes mindestens teilweise eliminiert werden. Der Füllstab kann aus Glas bestehen, das im Wesentlichen den gleichen Brechungsindex und thermischen Ausdehnungskoeffizienten hat wie der Mantelglas-Hohlzylinder. Aber selbst bei dieser Maßnahme entstehen beim Aufkollabieren auf den Füllstab mechanische Spannungen, die ein nachträgliches Tempern des Verbundes aus Mantelglas-Hohlzylinder und Füllstab erfordern kann.

Die in das Faser-Design zusätzlich einzufügende Markerzone soll einen möglichst kleinen Querschnitt haben, um unerwünschten Effekten entgegenzuwirken, wie beispielsweise dem Einfluss auf die Signalübertragung, in der Faser induzierten Spannungen oder dem sogenannten Faser-Curl. Als "Faser-Curl" wird der Krümmungsgrad über eine bestimmte Länge der Faser definiert. Die Krümmung resultiert aus thermischen Spannungen, die während der Faserherstellung entstehen. Eine hohes "Faser-Curl" erzeugt optische Verluste durch Mikrobiegungen und erschwert das dämpfungsarme Spleißen der Mehrkernfaser.

Um diese Nachteile zu minimieren, wird eine dünne Markerzone angestrebt, die wiederum auf der Ebene des Mantelglas-Hohlzylinder einen möglichst kleinen Durchmesser des Kanals zur Aufnahme des Markerelements erfordert. Typischerweise liegt der Kanal-Durchmesser im Mantelglas-Hohlzylinder bei weniger als 15mm, einhergehend mit einem hohen Aspektverhältnis oberhalb von 65 (bei einer Hohlzylinderlänge von etwa 1m).

Die maßgenaue Herstellung und exakte Ausrichtung derartig dünner Kanäle in einem Mantelglas-Hohlzylinder ist selbst bei Einsatz von Hochpräzisions-Bohrmaschinen schwierig. Außerdem hat es sich gezeigt, dass gerade beim Bohren dünner Kanäle verstärkt Risse in der Kanalwandung erzeugt werden. Der Kostenaufwand für die Herstellung des Mantelglas-Hohlzylinders aus synthetischem Quarzglas ist groß und der Verlust besonders schmerzlich, wenn ausgerechnet die kleine Bohrung für die Aufnahme des Markerelements zum Ausschuss des ansonsten fertiggestellten Mantelglas-Hohlzylinders führt.

Erschwerend kommt hinzu, dass das Schneiden und Spleißen der Mehrkernfaser gemäß den spezifischen Anforderungen beim bestimmungsgemäßen Einsatz an jeder beliebigen Position erfolgen kann, so dass auf eine konsistente Geometrie entlang der gesamten Faserlänge vertraut werden muss, um nicht auf Messungen angewiesen zu sein. Auf der Ebene des Mantelglas-Hohlzylinders bedeutet dies, dass die Längsachsen von Markerelement und Mantelglas-Hohlzylinder möglichst parallel verlaufen müssen.

Der Erfindung liegt daher die Aufgabe zugrunde, ein Verfahren zur Herstellung von Mehrkernfasern mit Markerzone anzugeben, das die Kostenvorteile des Außenabscheideverfahrens nutzt, aber die mit dem Füllstab und dem Markerelement einhergehenden Nachteile und Schwierigkeiten verringert, und bei dem auch die Gefahr von Ausschuss vermindert ist.

Außerdem liegt der Erfindung die Aufgabe zugrunde, ein Zwischenprodukt bereitzustellen, das geeignet ist zur kostengünstigen Herstellung einer Mehrkernfaser mit Markerelement, die sich insbesondere durch ein geringes Faser-Curl auszeichnet.

### Allgemeine Beschreibung der Erfindung

Hinsichtlich des Verfahrens wird diese Aufgabe ausgehend von dem eingangs genannten Verfahren erfindungsgemäß dadurch gelöst, dass der Targetstab einen sich entlang der Targetstab-Längsachse erstreckenden und an den ersten Glasbereich angrenzenden Markerbereich aufweist, der das Markerelement enthält oder der einen Hohlkanal bereitstellt, der entweder das Markerelement bildet oder der zur Aufnahme des Markerelements ausgelegt ist.

Die Mehrkernfaser wird durch Elongieren der Vorform oder des Halbzeugs erhalten. Das Halbzeug ist beispielsweise eine primäre Vorform für die Mehrkernfaser oder es ist ein Ensemble von Bauteilen, das direkt zu der Mehrkernfaser gezogen oder zu einer Vorform für die Mehrkernfaser weiterverarbeitet wird.

Das Erzeugen des Mantelglasbereichs des Halbzeugs umfasst einen Verfahrensschritt, bei dem anhand eines Außenabscheideverfahrens eine Mantelmaterialschicht erzeugt wird. Außenabscheideverfahren sind beispielsweise thermische Spritzverfahren oder Dampfphasen-Abscheideverfahren.

Beim thermischen Spritzen werden oxidische oder leicht oxidierbare siliziumhaltige oder siliziumdioxidhaltige Ausgangspulver in Form einer fluiden Masse, wie etwa als fließfähiges SiO₂-Pulver, Sol, Dispersion oder Aufschlämmung einer Energiequelle zugeführt, darin aufgeschmolzen und mit hoher Geschwindigkeit auf die Außenmantel eines um seine Längsachse rotierenden Abscheidedorns geschleudert. Die Energiequelle ist beispielsweise eine Brenngas-Sauerstoff-Flamme, ein Plasmastrahl, ein Lichtbogen oder ein Laserstrahl. Besonders bevorzugt ist hierbei das Plasmaspritzverfahren, das einen vergleichsweise hohen Energieeintrag sowie hohe Geschwindigkeiten beim Aufschleudern der aufgeschmolzenen Ausgangspulverteilchen ermöglicht.

Bei Dampfphasen-Abscheideverfahren werden SiO₂-Partikel durch Hydrolyse, Pyrolyse oder Oxidation eines siliziumhaltigen Precursors in situ erzeugt und diese auf der Außenmantel eines um seine Längsachse rotierenden Abscheidedorns als SiO₂-haltige Schicht abgelagert. Als Beispiele dafür seien das OVD-Verfahren (outside vapour phase deposition) und das POD-Verfahren (plasma outside deposition) genannt. Bei hinreichend hoher Temperatur im Bereich der Abscheidedorn-Oberfläche kommt es zu einem unmittelbaren Verglasen der SiO₂-Partikel, was auch als "Direktverglasen" bekannt ist. Im Unterschied dazu ist beim so genannten "Sootverfahren" die Temperatur beim Abscheiden der SiO₂-Partikel so niedrig, dass eine poröse SiO₂-Sootschicht erhalten wird.

Die beim Sootverfahren als Mantelmaterialschicht erhaltene poröse SiO₂-Sootschicht wird in einem separaten Verfahrensschritt zu einem Mantelglasbereich aus transparentem Quarzglas verglast. Bei den Außenabscheideverfahren mit Direktverglasung und bei den thermischen Spritzverfahren wird als Mantelmaterialschicht unmittelbar eine glasige Schicht erhalten, die den Mantelglasbereich des Halbzeugs oder mindestens einen Teil davon bildet.

Die Herstellung des Mantelglasbereichs des Halbzeugs anhand von Außenabscheideverfahren ist kostengünstig im Vergleich zu anderen Herstellungsmethoden.

Beim erfindungsgemäßen Verfahren wird als Abscheidedorn für das Außenabscheideverfahren ein Targetstab eingesetzt. Nach Abschluss des Außenabscheideverfahrens verbleibt der Targetstab in der abgeschiedenen Mantelmaterialschicht und bildet somit einen Teil des Halbzeugs zur Herstellung der Mehrkernfaser. Der Targetstab besteht aus glasigem Material, das Bestanteil der Mehrkernfaser wird. Dies ist ein Unterschied zu anderen Außenabscheideverfahren, bei denen der Abscheidedorn nach Abschluss des Außenabscheideverfahrens entfernt wird, so dass eine zentrale Durchgangsöffnung in der Mantelmaterialschicht verbleibt. Ein nachträgliches Auffüllen der Durchgangsöffnung mit einem Füllstab erübrigt sich somit und damit entfallen auch die mit dem Auffüllen einhergehenden Schwierigkeiten zur Gewährleistung der Geradheit, Maßhaltigkeit und möglichst weitgehender Spannungsfreiheit, sowie die Ausfallrisiken und die Aufwendungen für Justage, Zeit und Material.

Der Targetstab weist mindestens einen ersten Glasbereich und einen daran angrenzenden Markerbereich auf. Der Markerbereich ist im oder am Targetstab ausgebildet. Der Targetstab wird somit dafür genutzt, um zusätzlich zum Targetstab-Material ein Markerelement in das Halbzeug einzufügen. Der Targetstab kann zusätzlich zum ersten Glasbereich einen weiteren Glasbereich oder mehrere Glasbereiche aufweisen, die sich in ihrer chemischen Zusammensetzung vom ersten Glasbereich unterscheiden.

Das Markerelement bildet im Targetstab zum Beispiel einen Hohlkanal, der mit Luft, einem zylinderförmigen Bauteil oder mehreren zylinderförmigen Bauteilen oder mit einer Pulverschüttung gefüllt sein kann, oder das Markerelement ist an einer Außenwandung des Targetstabs angeordnet und ist dabei als (mindestens ein) zylinderförmiges Bauteil ausgeführt oder als an der Außenwandung haftende Beschichtung oder Masse. Der Hohlkanal kann auch nach Abschluss des Außenabscheideverfahrens mit einem Markermaterial gefüllt werden.

Da sich das Markerelement im oder am Targetstab befindet, entfällt die Notwendigkeit dafür, die Mantelmaterialschicht zwecks Einfügung des Markerelements anzupassen, beispielsweise durch eine mechanische Bearbeitung und insbesondere durch Erzeugung einer Bohrung für die Aufnahme des Markerelements in der Mantelmaterialschicht. Der mit einer derartigen Anpassung der Mantelmaterialschicht einhergehende Aufwand und das Beschädigungsrisiko entfallen somit.

Die Maßhaltigkeit und die Geradheit des Targetstabs sind vergleichsweise einfach zu gewährleisten, - sofern erforderlich - durch mechanisches Rundschleifen und/oder durch einen Elongierprozess, dem ein Ausgangszylinder unterzogen wird, um daraus einen Zylinderstrang zu elongieren, aus dem der Targetstab erzeugt wird oder aus dem mehrere Targetstäbe abgelängt werden. Um Beschädigungen der Zylinderstrang-Oberfläche zu vermeiden, erfolgt der Elongierprozess vorzugsweise ohne Einsatz eines Formwerkzeugs, das am abgezogenen Zylinderstrang angreift.

Eine achsenparallele Ausrichtung des Markerelements wird dadurch erleichtert, indem es an den Targetstab beziehungsweise an dessen ersten Glasbereich angrenzt. Dessen vergleichsweise einfach zu erreichende Geradheit erleichtert auch die achsenparallele Ausrichtung des Markerelements. Dies gilt insbesondere für eine besonders bevorzugte Verfahrensweise, bei der der Markerbereich zwischen dem ersten Glasbereich und dem Mantelglasbereich angeordnet wird.

Somit wird das Bauteil-Ensemble mit einem Markerelement ausgestattet, ohne dass dafür eine separate Bohrung im Mantelglasbereich - verbunden mit den oben erläuterten Risiken und Schwierigkeiten - erzeugt werden muss. Gleichzeitig kann trotz hohem Aspektverhältnis eine hohe Genauigkeit gewährleistet werden, die sich beispielsweise im Halbzeug darin manifestiert, dass die Achsenparallelität des Markerelements eine Abweichung von weniger als 0,3mm/m hat.

Der Targetstab kann aus einem einzigen Glaszylinder bestehen oder er kann aus mehreren, miteinander verbundenen Glaszylindern zusammengesetzt sein. Die mehreren Glaszylinder können die gleiche Zusammensetzung haben oder sie können sich in ihrer Zusammensetzung voneinander unterscheiden. Der Targetstab kann vollständig oder zum Teil aus dem Mantelglas und/oder aus dem Kernglas bestehen oder aus einem anderen Glas und/oder anderen Gläsern.

Die chemischen Zusammensetzungen von erstem Glasbereich und dem daran angrenzenden Markerbereich unterscheiden sich voneinander. In der Mehrkernfaser bildet der Markerbereich eine durchgängige, linienartige Markerzone aus einem Markermaterial oder aus Luft. Die Markerzone kann beispielsweise beim Spleißen zur Symmetriebrechung und zur eindeutigen Identifizierung der Signalkerne sowie deren Positionen zueinander und in Bezug auf die Faser-Mittelachse dienen.

In der Mantelmaterialschicht werden in üblicher Weise mehrere Kernstab-Bohrungen zur Aufnahme von jeweils einem Kernstab erzeugt. Auch in den Targetstab kann mindestens eine Kernstab-Bohrung zur Aufnahme eines Kernstabs eingebracht werden.

Das so hergestellte, mit mehreren Kernglasbereichen versehene Halbzeug wird umgeformt und dabei entweder direkt zu der Mehrkernfaser gezogen oder es wird zu einer Vorform für die Mehrkernfaser konsolidiert, wobei das Konsolidieren mit einem gleichzeitigen Elongieren einhergehen kann. Die so erzeugte "konsolidierte Vorform" wird gegebenenfalls zu der Mehrkernfaser gezogen oder sie wird zu einer "sekundären Vorform" weiterverarbeitet. Die Weiterverarbeitung zur "sekundären Vorform" umfasst beispielsweise das Erzeugen weiterer Bohrungen im Mantelglasbereich und deren Belegung mit Kernglas oder mit anderen Gläsern oder die einmalige oder wiederholte Durchführung von einem oder mehreren der folgenden Heißformprozesse: Aufkollabieren von zusätzlichem Mantelmaterial, Kollabieren, Elongieren, Kollabieren und gleichzeitiges Elongieren. Aus der durch die Weiterverarbeitung erzeugten sekundären Vorform wird die Mehrkernfaser gezogen.

Das Markerelement wird vorzugsweise in Form eines zylinderförmigen Bauteils aus einem Markermaterial oder in Form einer mit dem Targetstab verbundenen Schicht oder einer Masse aus dem Markermaterial bereitgestellt.

Bei einem Markerelement, das mindestens ein zylinderförmiges Bauteil enthält, erstreckt sich dieses Bauteil parallel zum Targetstab und ist mindestens lokal, bevorzugt über die gesamte Bauteil-Länge, mit dem Targetstab verbunden. Das mindestens eine zylinderförmige Markerelement-Bauteil ist beispielsweise ein Rohr und bevorzugt ein Stab. Bei einem Markerelement in Form eines Rohres kann die Rohrwandung ein Material enthalten, das eine höhere Viskosität aufweist als das Mantelglas, so dass beim Faserziehprozess die Bohrung nicht vollständig kollabiert und in der fertigen Mehrkernfaser als Hohlraum ("Airline") erhalten bleibt.

Bei einem Markerelement in Form einer mit dem Targetstab verbundenen Schicht oder Masse, ist diese beispielsweise innerhalb eines Hohlkanals im Targetstab angeordnet, und sie ist bevorzugt im Bereich des Außenmantels des Targetstabs angebracht.

Durch das Anbringen am Targetstab profitiert das Markerelement ganz besonders von dessen Geradheit und Ausrichtung; diese Eigenschaften werden quasi auf das Markerelement übertragen. Das Anbringen beruht beispielsweise auf Reibschluss, Stoffschluss und/oder Formschluss zwischen Targetstab und Markerelement.

Die Querschnittsgeometrie des Targetstabs ist in der Regel kreisrund. Sie kann auch eine von der Kreisrundform abweichende Geometrie haben, wie etwa eine ovale, elliptische oder polygonale Geometrie. Ein die Querschnittskontur umhüllender Hüllkreis hat beispielsweise einen Durchmesser im Bereich von 36mm bis 76mm.

Die Herstellung des Targetstabs erfolgt beispielsweise durch axiales Abscheiden aus der Gasphase nach dem sogenannten VAD-Verfahren oder nach dem OVD-Verfahren, wobei die zentrale Durchgangsöffnung nachträglich kollabiert wird, oder sie erfolgt durch ein Pressverfahren. Beim Pressverfahren wird eine Schüttung von SiO₂-Partikeln in einen Formhohlraum eingebracht, und es wird Druck auf die Schüttung ausgeübt, um einen verdichteten Rohling zu bilden, der anschließend zu einem Glasstab verglast wird.

Bei einer bevorzugten Verfahrensweise weist der Targetstab eine sich entlang der Targetstab-Längsachse erstreckende Ausnehmung auf, die das Markerelement bildet oder in der das Markerelement angeordnet ist.

Die Ausnehmung ist beispielsweise als Bohrung durch den Targetstab und vorzugsweise als Längsrille (Längsnut) am Außenmantel des Targetstabs ausgeführt. Die rillenförmige Ausnehmung ist beispielsweise mit einem zylinderförmigen Bauteil aus einem Markermaterial oder mit einem partikelförmigen Markermaterial gefüllt. Das partikelförmige Markermaterial kann durch thermische Verdichtung oder durch Hinzufügen von Bindemittel eine gewisse Formstabilität haben. Dabei gewährleistet die Ausnehmung einen Formschluss zwischen Markerelement und Targetstab. Markerelement und Targetstab können auch vorab (das heißt: vor dem Abscheiden der Mantelmaterialschicht) durch Stoffschluss miteinander verbunden werden, beispielsweise durch Zusammensintern oder Verschmelzen, was hier auch als "Konsolidieren" bezeichnet wird. Beim Konsolidieren können sich etwaige Kanten und Überstände abrunden. Nach dem Konsolidieren füllt das Markermaterial die Ausnehmung bevorzugt möglichst vollständig aus.

Besonders bevorzugt ist in dem Zusammenhang diejenige Verfahrensweise, bei der ein Targetstab mit einer Längsrille versehen wird. Denn zum einen ist eine Längsrille im Targetstab-Außenmantel im Vergleich zu einer Bohrung besonders einfach und geometrisch exakt zu fertigen; beispielsweise durch Fräsen mittels mechanischem Fräser oder durch Laserablation. Zum anderen ist die so erzeugte Längsrille genauso so exakt und gerade wie der Targetstab selbst. Und darüber hinaus können die Tiefe beziehungsweise die Öffnungsweite der Längsrille fast beliebig klein gehalten werden, beispielsweise beides weniger als 15mm, vorzugsweise weniger als 10mm und besonders bevorzugt weniger als 5mm. Die Längsrille kann beim Außenabscheideverfahren mit einem Markermaterial gefüllt sein. Somit sind auf einfache Weise geometrisch exakte Markerelemente mit geringem Volumen herstellbar, die im Halbzeug eine Abweichung ihrer axialen Ausrichtung von weniger als 0,3mm/m haben und die demgemäß in der Mehrkernfaser entsprechend kleine und hochgenaue Markerzonen ausbilden. Das Füllen der Längsrille mit dem Markermaterial erfolgt beispielsweise durch Einlegen eines zylinderförmigen Bauteils (Stab oder Rohr) aus dem Markermaterial oder durch Einbringen einer Schüttung von Teilchen aus dem Markermaterial oder durch Innenbeschichtung der Längsrille mit dem Markermaterial. Das zylinderförmige Bauteil, die Innenbeschichtung beziehungsweise die Schüttung aus dem Markermaterial kann in der Längsrille zusätzlich durch Verschmelzen fixiert werden.

Bei einer bevorzugten Verfahrensweise wird ein Schmelzverbund aus Targetstab und Markerelement durch Elongieren eines Vorprodukts erzeugt. Das Vorprodukt liegt beispielsweise als Verbund von Targetstab- und Markerelement vor, oder es bildet ein Ensemble von Targetstab- und Markerelement-Ausgangskörpern, die nicht oder nur lokal miteinander verbunden sind. Das Vorprodukt hat größere laterale Abmessungen als der herzustellende Schmelzverbund aus Targetstab und Markerelement. Das Elongieren des Vorprodukts bewirkt zum einen das Herunterskalieren etwaiger Geometriefehler und Maßabweichungen und zum anderen trägt es zum Geraderichten des Schmelzverbundes bei. Aus dem elongierten Schmelzverbund-Strang wird der gewünschte Schmelzverbund aus Targetstab und Markerelement zum Einsatz bei der Mehrkernfaser-Herstellung abgelängt. Auf diese Weise sind Markerelemente mit geringen lateralen Abmessungen auch bei besonders großen Aspektverhältnissen mit hoher Maßhaltigkeit herstellbar.

Bei einer besonders bevorzugten Verfahrensvariante wird die anhand des Außenabscheideverfahrens erzeugte Mantelmaterialschicht als Sootschicht auf Basis von SiO₂ ausgebildet.

Die SiO₂-Sootschicht wird durch Hydrolyse, Pyrolyse oder Oxidation einer siliziumhaltigen Ausgangsverbindung in einer sauerstoffhaltigen Reaktionszone und Abscheidung der dabei gebildeten SiO₂-Partikel auf dem Außenmantel des rotierenden Targetstabs erzeugt. Dabei wird die Temperatur im Bereich des Targetstab-Außenmantels so niedrig gehalten, dass die abgeschiedene Mantelmaterialschicht nicht dicht verglast, sondern porös bleibt. Diese Temperatur liegt beispielsweise im Bereich von 800°C und 1250°C, und die spezifische Dichte liegt typischerweise im Bereich von etwa 0,6 g/cm³ bis 1,8 g/cm³.

Die Porosität der SiO₂-Mantelmaterialschicht ermöglicht ein nachträgliches Entfernen der darin enthaltenen OH-Gruppen durch Behandlung in trocknender Atmosphäre und ein Dotieren mit einem gasförmigen Dotierstoff, wie beispielsweise Fluor.

Die Sootschicht wird vorzugsweise durch Erhitzen auf eine Verglasungstemperatur verglast.

Das Verglasen erfolgt beispielsweise durch Erhitzen in einem Sinterofen auf eine Temperatur oberhalb von 1400°C unter Vakuum und/oder in einer Helium-Atmosphäre. Es wird so eine Mantelmaterialschicht aus transparentem Quarzglas erhalten.

Bei einer Verfahrensweise wird die Sootschicht vor dem Verglasen einer Dotierungsbehandlung in einer einen Dotierstoff enthaltenden Atmosphäre und/oder einer Dehydratationsbehandlung in halogenhaltiger Atmosphäre oder unter Vakuum unterzogen.

Die Dotierungs- beziehungsweise Dehydratationsbehandlung kann dem Verglasungsprozess unmittelbar vorangehen und kann im gleichen Ofen stattfinden. Die Dehydratationsbehandlung umfasst beispielsweise eine Heliumspülung, gefolgt von einer einem Heißchlorierungsprozess bei einer Temperatur um 900°C. Bei der alternativen Trocknung unter Vakuum wird die SiO₂-Sootschicht bei einer Temperatur von mindestens 1150 °C unter einem Druck von 0,1 mbar oder weniger in einem Vakuumofen behandelt. Die Hydroxylgruppenkonzentration wird dadurch auf weniger als 1 Gew.-ppm abgesenkt.

Die Dotierungsbehandlung umfasst beispielsweise die Beladung der SiO₂-Sootschicht mit Fluor, indem der Targetstab mitsamt der Mantelmaterialschicht in einen Dotierofen eingebracht und bei einer Temperatur oberhalb von 980°C mehrere Stunden einer Atmosphäre ausgesetzt wird, die fluorhaltige Substanzen enthält, wie beispielsweise Siliciumtetrafluorid. Auf diese Weise wird eine Fluorbeladung der SiO₂-Sootschicht ermöglicht, die beispielsweise nach dem Konsolidieren einen mittleren Fluorgehalt von mindestens 1500 Gew.-ppm ergibt.

Bei einer bevorzugten Verfahrensvariante werden die Kernstab-Bohrungen zur Aufnahme von Kernglasstäben in der Mantelmaterialschicht nach dem Verglasen der Sootschicht erzeugt.

Die im Vergleich zu dichtem Quarzglas geringere Dichte der Mantelmaterialschicht aus SiO₂-Soot erleichtert das Erzeugen von Bohrungen zur Aufnahme von Kernglasstäben. In die Mantelmaterialschicht werden in üblicher Weise zwei oder mehr, beispielsweise vier bis sieben Längsbohrungen (Kernstab-Bohrungen) eingebracht, deren Längsachsen parallel zur Targetstab-Längsachse verlaufen. Die Kernstab-Bohrungen sind Durchgangsbohrungen oder Sacklochbohrungen und dienen zur Aufnahme von jeweils mindestens einem Kernstab aus dem Kernglas.

Die Zusammensetzung des Kernglases ist in radialer Richtung gesehen gleichbleibend homogen oder sie ändert sich graduell oder stufenweise. Sie unterscheidet sich von der des Mantelglases so, dass eine Lichtführung im Kernglasbereich gewährleistet wird. Im einfachsten Fall haben alle Kernstäbe die gleichen Abmessungen und bestehen aus dem gleichen Kernglas. Die Kernstäbe können sich aber auch in ihren Abmessungen und/oder in der Zusammensetzung des jeweiligen Kernglases unterscheiden.

Um das Risiko einer Beschädigung der Kernstäbe zu minimieren, erfolgt das Einsetzen der Kernstäbe in die Kernstab-Bohrungen vorzugsweise nach dem Verglasen der porösen Mantelmaterialschicht und der Ausbildung des Mantelglasbereichs aus transparentem Quarzglas.

Das Markerelement bildet einen luftgefüllten, langgestreckten Hohlkanal oder es enthält ein Markermaterial, das sich vorzugsweise in mindestens einer physikalischen und/oder chemischen Eigenschaft vom angrenzenden Mantelglas und/oder vom angrenzenden ersten Glasbereich des Targetstabs unterscheidet, wobei die Eigenschaft vorzugsweise ausgewählt ist aus: Brechungsindex, Farbe, Fluoreszenz und/oder spezifischer Glasdichte.

Die Eigenschaft (beziehungsweise die Eigenschaften), die das Markerelement von den Gläsern des Bauteil-Ensembles unterscheidet, wirkt sich insbesondere auf die optischvisuelle Erscheinung des Markerelements aus und ist vorzugsweise mittels eines optischen Sensors erfassbar. Die Glaszusammensetzung eines Markerglases kann - so wie beispielsweise auch das Glas-Füllmaterial - auf Quarzglas basieren. Durch Dotierung kann der Brechungsindex von Quarzglas verändert werden. So bewirkt beispielsweise die Dotierung eines Marker-Quarzglases mit Fluor eine Absenkung des Brechungsindex gegenüber undotiertem Quarzglas. Eine Einlagerung von Kohlenstoff in das Marker-Quarzglas kann zu einer Schwarzfärbung führen. Eine Dotierung des Marker-Quarzglases mit Titan bewirkt je nach Oxidationszustand eine Grau-Blaufärbung. Eine Dotierung des Marker-Quarzglases mit Seltenerdmetallen oder Germaniumoxid äußert sich in einer Fluoreszenz bei Dotierstoff-spezifischen Wellenlängen. Die spezifische Glasdichte des Markerelements ist durch Poren veränderbar und äußert sich in einer Verringerung der optischen Transparenz gegenüber blasenfreiem Glas.

Bei einer bevorzugten Verfahrensweise umfasst die Herstellung des Bauteil-Ensembles folgende Verfahrensschritte:
(a) Bereitstellen des den Markerbereich aufweisenden Targetstabs,
(b) Bereitstellen mehrerer Kernstäbe, die ein Kernglas enthalten,
(c) Abscheiden der Mantelmaterialschicht auf dem Außenmantel des Targetstabs anhand des Außenabscheideverfahrens,
(d) Erzeugen von Kernstab-Bohrungen mindestens in der Mantelmaterialschicht und optional im ersten Glasbereich des Targetstabs, und
(e) Einsetzen der Kernstäbe in die Kernstab-Bohrungen.

Das so erzeugte Halbzeug umfasst den Targetstab mit dem mindestens einen Markerelement und der darauf erzeugten Mantelmaterialschicht sowie die Kernstäbe. Die Listenzeichen (a) bis (d) geben keine Reihenfolge der Verfahrensschritte vor. Als Kernstäbe des Halbzeugs werden hier auch solche Kernstäbe bezeichnet, wenn diese in ihrer jeweiligen Kernstab-Bohrung bereits eingeschmolzen sind.

Bei einer bevorzugten Verfahrensvariante ist der Markerbereich als Hohlkanal ausgebildet, wobei vor oder nach dem Einsetzen der Kernstäbe in die Kernstab-Bohrungen ein zylinderförmiges Markerelement in den Hohlkanal eingefügt wird.

Hinsichtlich des Zwischenprodukts zur Herstellung einer Mehrkernfaser oder einer Vorform dafür wird die oben angegebene technische Aufgabe ausgehend von einem Zwischenprodukt mit den eingangs genannten Merkmalen erfindungsgemäß dadurch gelöst, dass das Markerelement an oder in dem Targetstab ausgebildet ist.

Das erfindungsgemäße Zwischenprodukt kann als solche im Rahmen der Herstellung einer Mehrkernfaser oder der Herstellung einer Vorform für die Mehrkernfaser anhand des erfindungsgemäßen Verfahrens auftreten. Für diese Anwendung ist es ein besonders bevorzugtes Zwischenprodukt.

Das Zwischenprodukt ist ein zylinderförmiger Fügeverbund, umfassend eine Mantelmaterialschicht mit einem zentralen Bereich, der von einem Targetstab aus Glas belegt ist, und an oder in dem mindestens ein Markerelement ausgebildet ist. Die Mantelmaterialschicht liegt als poröse Sootschicht auf SiO₂-Basis vor. Sie wird durch ein Außenabscheideverfahren (OVD-Verfahren) erzeugt und bildet in der finalen Mehrkernfaser einen Mantelglasbereich aus einem Mantelglas.

Der Targetstab erstreckt sich in der Zylinderlängsachse und bildet den zentralen Volumenbereich des Zylinders. Zu dem zentralen Volumenbereich gehört außerdem das mindestens eine Markerelement, das an einen ersten Glasbereich des Targetstabs angrenzt.

Bei Ausführungsformen, bei denen die chemische Zusammensetzung des ersten Glasbereichs des Targetstabs derjenigen des Mantelglases der Mehrkernfaser entspricht, bildet der entsprechende Volumenbereich in der Mehrkernfaser einen Teil des optischen Mantels. Bei Ausführungsformen, bei denen sich die chemischen Zusammensetzungen des ersten Glasbereichs des Targetstabs und des Mantelglases der Mehrkernfaser voneinander unterscheiden, kann dem Targetstab in der Mehrkernfaser eine zusätzliche Funktion zufallen, beispielsweise kann er als "Stresszone" wirken, die in radialer Richtung wirkende Druck- oder Zugspannungen innerhalb der Faser erzeugt und/oder kompensiert.

Der Targetstab kann einteilig sein oder aus mehreren parallel verlaufenden Zylindern bestehen. Er kann zusätzlich zum ersten Glasbereich einen weiteren Glasbereich oder mehrere Glasbereiche aufweisen, die sich in ihrer chemischen Zusammensetzung vom ersten Glasbereich unterscheiden. Insbesondere kann der Targetstab mindestens einen Kernglasbereich beinhalten, wobei der Kernglasbereich in der finalen Mehrkernfaser einen Signalkern bildet.

Der Targetstab wird dafür genutzt, um zusätzlich zum ersten Glasbereich ein Markerelement aus Markerglas bereitzustellen. Das Markerelement liegt im Zwischenprodukt beispielsweise als langgestreckter Hohlraum oder als konsolidiertes oder nicht-konsolidiertes Bauteil aus einem Markermaterial oder als Beschichtung eines derartigen Bauteils mit dem Markermaterial vor und bildet in der Mehrkernfaser eine durchgängige, linienartige Markerzone aus dem Markermaterial oder einen luftgefüllten Hohlkanal.

Das Markerelement wird im oder am Targetstab angeordnet. Es befindet sich beispielsweise in einem Hohlkanal, der sich parallel zur Zylinderlängsachse erstreckt, oder es ist am Außenmantel des Targetstabs angebracht. Da sich das Markerelement im oder am Targetstab aber nicht vollständig innerhalb der durch Außenabscheideverfahren erzeugten Mantelmaterialschicht befindet, entfällt die Notwendigkeit dafür, diesen Mantelglasbereich zwecks Einfügung des Markerelements anzupassen, beispielsweise durch eine mechanische Bearbeitung und insbesondere durch Erzeugung einer separaten Bohrung für die Aufnahme des Markerelements. Das mit einer derartigen Anpassung der Mantelmaterialschicht einhergehende Beschädigungsrisiko entfällt somit.

Die Maßhaltigkeit und die Geradheit des Targetstabs können durch einfache Maßnahmen gewährleistet werden. Zu den Maßnahmen gehören beispielsweise eine mechanische Bearbeitung des Targetstabs und/oder ein Elongierprozess. Die mechanische Bearbeitung kann gegebenenfalls ein Außenbearbeitungsverfahren sein, was in der Regel deutlich weniger aufwändig ist als ein Innenbearbeitungsverfahren.

Eine achsenparallele Ausrichtung des Markerelements wird dadurch erleichtert, indem es an den Targetstab angrenzt. Die vergleichsweise einfach zu erreichende Geradheit des Targetstabs erleichtert auch die achsenparallele Ausrichtung des Markerelements. Dies gilt insbesondere für eine besonders bevorzugte Ausführungsform, bei der das Markerelement zwischen dem ersten Glasbereich des Targetstabs und dem Mantelglasbereich angeordnet wird.

Somit ist das Zwischenprodukt mit einem Markerelement ausgestattet, für das keine separate Bohrung Bereich der Mantelmaterialschicht - verbunden mit den oben erläuterten Risiken und Schwierigkeiten - erzeugt werden musste. Gleichzeitig kann trotz hohem Aspektverhältnis eine hohe Genauigkeit gewährleistet werden, die sich beispielsweise im Zwischenprodukt darin manifestiert, dass die Achsenparallelität des Markerelements eine Abweichung von weniger als 0,3mm/m hat.

Der Targetstab kann aus einem einzigen Glaszylinder bestehen oder er kann aus mehreren, miteinander verbundenen Glaszylindern zusammengesetzt sein. Die mehreren Glaszylinder können die gleiche Zusammensetzung haben oder sie können sich in ihrer Zusammensetzung voneinander unterscheiden. Der Targetstab kann vollständig oder zum Teil aus dem Mantelglas oder aus dem Kernglas oder aus einem anderen Glas bestehen. Der Targetstab kann beispielsweise einen zentralen Kern aus dem Kernglas haben, das von einem Mantelbereich aus dem Mantelglas umgeben ist .

Das Markerelement liegt beispielsweise als Stab vor, der sich parallel zum Targetstab erstreckt.

Bei einer weiteren Ausführungsform liegt das Markerelement als Schicht aus einem Markermaterial vor, die in einem Hohlkanal im Targetstab oder im Bereich des Außenmantels des Targetstabs angebracht ist. Auch hier können die Markerelement-Schicht und der Targetstab gegebenenfalls auch in konsolidierter, also miteinander verschmolzener Form vorliegen.

Das Markerelement erstreckt sich entlang der Targetstab-Längsachse bevorzugt über dessen gesamte Länge und es kann lokal, vorzugsweise jedoch durchgehend an dem Targetstab angebracht sein.

Durch das Anbringen am Targetstab profitiert das Markerelement von dessen Geradheit und Ausrichtung; diese Eigenschaften werden quasi auf das Markerelement übertragen. Das Anbringen beruht beispielsweise auf Reibschluss, Stoffschluss und/oder Formschluss zwischen Targetstab und Markerelement.

Das Markerelement ist vorzugsweise in Form eines zylinderförmigen Bauteils aus einem Markermaterial oder in Form einer mit dem Targetstab verbundenen Schicht oder Masse aus dem Markermaterial ausgebildet. Das mindestens eine zylinderförmige Markerelement-Bauteil ist beispielsweise ein Rohr und bevorzugt ein Stab. Bei einem Markerelement in Form eines Rohres kann die Rohrwandung ein Material enthalten, das eine höhere Viskosität aufweist als das Mantelglas, so dass beim Faserziehprozess die Bohrung nicht vollständig kollabiert und in der fertigen Mehrkernfaser als Hohlraum ("Airline") erhalten bleibt.

Die Querschnittsgeometrie des Targetstabs ist in der Regel kreisrund. Sie kann auch eine von der Kreisrundform abweichende Geometrie haben, wie etwa eine ovale, elliptische oder polygonale Geometrie. Ein die Querschnittskontur umhüllender Hüllkreis hat beispielsweise einen Durchmesser im Bereich von 36mm bis 76mm.

Bei einer bevorzugten Ausführungsform weist der Targetstab eine sich entlang der Targetstab-Längsachse erstreckende Ausnehmung auf, die das Markerelement bildet oder in der das Markerelement angeordnet ist.

Die Ausnehmung ist vorzugsweise als Bohrung durch den Targetstab oder als Längsrille (Längsnut) am Außenmantel des Targetstabs ausgeführt. Sie bildet einen luftgefüllten Hohlkanal oder sie ist beispielsweise mit einem zylinderförmigen Bauteil aus einem Markermaterial oder mit einem partikelförmigen Markermaterial gefüllt. Das partikelförmige Markermaterial kann durch Teilverdichtung oder Hinzufügen von Bindemittel eine gewisse Formstabilität haben. Das Markermaterial füllt die Ausnehmung möglichst vollständig aus. Dabei gewährleistet die Ausnehmung einen Formschluss zwischen Markerelement und Targetstab. Markerelement und Targetstab können auch vorab (das heißt: vor dem Erzeugen der Mantelmaterialschicht) durch Stoffschluss miteinander verbunden werden, beispielsweise durch Zusammensintern oder Verschmelzen.

Besonders bevorzugt ist in dem Zusammenhang diejenige Ausführungsform, bei der ein Targetstab mit einer Längsrille versehen wird. Denn zum einen ist eine Längsrille im Targetstab-Außenmantel im Vergleich zu einer Bohrung besonders einfach zu fertigen; beispielsweise durch Fräsen mittels mechanischem Fräser oder durch Laserablation. Zum anderen ist die so erzeugte Längsrille genauso so exakt und gerade wie der Targetstab selbst. Und darüber hinaus können die Tiefe beziehungsweise die Öffnungsweite der Längsrille fast beliebig klein gehalten werden; beispielsweise beides weniger als 15mm, vorzugsweise weniger als 10mm und besonders bevorzugt weniger als 5mm. Dadurch sind auf einfache Weise geometrisch exakte Markerelemente mit geringem Volumen herstellbar, die im Zwischenprodukt eine Abweichung ihrer axialen Ausrichtung von weniger als 0,3mm/m haben und die demgemäß in der Mehrkernfaser entsprechend kleine und hochgenaue Markerzonen ausbilden.

Das Füllen der Längsrille mit dem Markermaterial erfolgt beispielsweise durch Einlegen eines zylinderförmigen Bauteils (Stab oder Rohr) aus dem Markermaterial oder durch Einbringen einer Schüttung von Teilchen aus dem Markermaterial oder durch Innenbeschichtung der Längsrille mit dem Markermaterial. Das zylinderförmige Bauteil, die Innenbeschichtung beziehungsweise die Schüttung aus dem Markermaterial kann in der Längsrille zusätzlich durch Verschmelzen fixiert werden.

Das Markerelement bildet einen luftgefüllten, langgestreckten Hohlraum (Kanal) oder Kanal oder es enthält ein Markermaterial, das sich vorzugsweise in mindestens einer physikalischen und/oder chemischen Eigenschaft vom angrenzenden ersten Glasbereich des Targetstabs und/oder von dem Mantelglas, das durch Verglasen der Mantelmaterialschicht des Zwischenprodukts erhalten wird, unterscheidet, wobei die Eigenschaft ausgewählt ist aus: Brechungsindex, Farbe, Fluoreszenz und/oder spezifischer Glasdichte.

Anhand des erfindungsgemäßen Verfahrens beziehungsweise unter Einsatz des erfindungsgemäßen Zwischenprodukts wird eine Mehrkernfaser erhalten, die mehrere Signalkerne aufweist und die von mindestens einer durchgängigen, linienartigen Markerzone durchzogen ist. Die Markerzone dient zur Symmetriebrechung sowie dazu, die Signalkerne sowie deren Positionen zueinander und in Bezug auf die Faser-Mittelachse eindeutig zu identifizieren.

### Definitionen und Messmethoden

Einzelne Begriffe der obigen Beschreibung werden im Folgenden ergänzend definiert. Die Definitionen sind Bestandteil der Beschreibung der Erfindung. Für Begriffe und Messverfahren, die in der Beschreibung nicht speziell definiert sind, ist die Auslegung gemäß der Internationalen Fernmeldeunion (ITU; International Telecommunication Union) maßgeblich. Bei einem Widerspruch zwischen einer der folgenden Definitionen und der übrigen Beschreibung ist das in der übrigen Beschreibung Gesagte maßgeblich.

### Mantelglas / Mantelglasbereich

Der Mantelglasbereich enthält ein Mantelglas. Mindestens ein Teil des Mantelglasbereichs wird mittels eines Außenabscheideverfahrens erzeugt. Im Mantelglasbereich werden zur Signalübertragung ausgelegte Kernglasbereiche erzeugt. Das Mantelglas besteht beispielsweise aus undotiertem Quarzglas oder es enthält mindestens einen den Brechungsindex von Quarzglas absenkenden Dotierstoff. Fluor und Bor sind Dotierstoffe, die den Brechungsindex von Quarzglas absenken können.

### Kernstäbe / Kernglasbereich

Die Kernstäbe enthalten ein Kernglas, das in radialer Richtung einen homogenen oder einen nicht-homogenen Brechungsindex-Verlauf aufweist. Das Kernglas von jedem der Kernstäbe bildet einen Kernglasbereich. Die Kernstäbe können einen Bereich aus einem Kernglas mit einem vergleichsweise hohen Brechungsindex und mindestens einen weiteren Bereich aus einem anderen Glas mit einem vergleichsweise niedrigen Brechungsindex enthalten; beispielsweise ein Quarzglas, das mit Fluor und/oder Chlor dotiert ist. Das Glas mit dem höchsten Brechungsindex befindet sich in der Regel in der zentralen Achse des Kernstabs. Es besteht beispielsweise aus Quarzglas, dem mindestens ein Dotierstoff zur Erhöhung des Brechungsindex zugesetzt ist. In der Mehrkernfaser bildet der Kernstab mindestens einen Signalkern aus, in dem das zu übertragende Signal hauptsächlich transportiert wird. Der Signalkern kann an andere Glasbereiche mit kleinerem Brechungsindex angrenzen, die ebenfalls vom Kernstab bereitgestellt worden sind.

### Targetstab

Der Targetstab weist mindestens einen ersten Glasbereich und einen daran angrenzenden Markerbereich auf, der im oder am Targetstab ausgebildet ist. Er kann zusätzlich zum ersten Glasbereich einen weiteren Glasbereich oder mehrere Glasbereiche aufweisen, die sich in ihrer chemischen Zusammensetzung vom ersten Glasbereich unterscheiden. Der Targetstab besteht aus Glas, das Bestanteil der Mehrkernfaser wird. Insbesondere kann der Targetstab einen Glasbereich aufweisen, der in der finalen Mehrkernfaser als Signalkern dient. Die Zusammensetzung des ersten Glasbereichs kann der des Mantelglases entsprechen oder sie kann von der des Mantelglases abweichen, um der Mehrkernfaser eine zusätzliche Eigenschaft aufzuprägen.

Der Targetstab dient als Abscheidedorn zur Durchführung eines

Außenabscheideverfahrens, mittels dem eine Mantelmaterialschicht aus dem Targetstab erzeugt wird. Die Mantelmaterialschicht besteht aus Quarzglas oder sie liegt vollständig oder teilweise als SiO₂-Sootschicht vor. Der Targetstab dient somit dafür, zusätzlich zum Targetstab-Material ein Markerelement in den achsnahen Bereich der Mantelmaterialschicht einzufügen.

### Markerelement / Markermaterial / Markerglas

Das Markerelement enthält Luft und/oder ein Markermaterial, insbesondere mindestens ein Markerglas. Die chemische Zusammensetzung des Markermaterials unterscheidet sich von der des angrenzenden ersten Targetstab-Glasbereichs, an das es angrenzt, und/oder die Dichte des Markermaterials unterscheidet sich von der des Mantelglases und des ersten Targetstab-Glasbereichs. Das Markerelement liegt im Halbzeug als Bauteil oder als Schicht oder Masse auf einem Bauteil vor und bildet in der Mehrkernfaser eine optisch detektierbare Markerzone.

### Bauteil-Ensemble / konsolidierte Vorform / sekundäre Vorform / Halbzeug /

### Zwischenprodukt

Das "Bauteil-Ensemble" umfasst den Targetstab mit dem mindestens einen Markerelement und der auf dem Targetstab abgeschiedenen Mantelmaterialschicht mit Kernstab-Bohrungen, in die jeweils ein Kernstab eingesetzt ist. Durch Fixieren der Kernstäbe in den Kernstab-Bohrungen; beispielsweise durch Verengung eines Mantelglas-Hohlzylinder-Endes oder durch Kollabieren und Verschmelzen, wird eine "Vorform" erhalten, die hier auch als "konsolidierte Vorform" bezeichnet wird. Das Bauteil-Ensemble oder die (konsolidierte) Vorform werden zu einer "sekundären Vorform" oder direkt zu der Mehrkernfaser elongiert. Unter dem Begriff "Halbzeug" werden hier das Bauteil-Ensemble, die konsolidierte Vorform und die sekundäre Vorform subsumiert. Als Zwischenprodukt wird ein zylinderförmiger Fügeverbund bezeichnet, der einen Targetstab aus Glas, ein Markerelement und eine SiO₂-Soot enthaltende Mantelmaterialschicht umfasst, die den Targetstab und das Markerelement umgibt.

### Quarzglas

Unter Quarzglas wird hier hochkieselsäurehaltiges Glas mit einem SiO₂-Anteil von mindestens 80 mol-%, bevorzugt mindestens 90 mol.-%, verstanden. Das Quarzglas ist undotiert oder es enthält einen oder mehrere Dotierstoffe. Es ist beispielsweise aus natürlich vorkommendem SiO₂-Rohstoff erschmolzen (natürliches Quarzglas), oder es ist synthetisch erzeugt (synthetisches Quarzglas) oder es besteht aus Mischungen dieser Quarzglassorten. Synthetisches, transparentes Quarzglas wird beispielsweise durch Flammenhydrolyse oder Oxidation synthetisch erzeugter Siliziumverbindungen, durch Polykondensation organischer Siliziumverbindungen nach dem so genannten Sol-Gel-Verfahren oder durch Hydrolyse und Fällung anorganischer Siliziumverbindungen in einer Flüssigkeit erhalten.

### Konsolidieren / Verschmelzen / Verglasen / Kollabieren

Im Zusammenhang mit Bauteilen oder einer SiO₂-Masse aus Glas ist unter Verschmelzen zu verstehen, dass die Bauteile beziehungsweise die SiO₂-Masse an einer Kontaktfläche miteinander verschmolzen werden. Das Verschmelzen erfolgt durch Aufheizen der Bauteile beziehungsweise der SiO₂-Masse mindestens im Bereich der Kontaktfläche mittels einer Heizquelle, wie einem Ofen, einem Brenner oder einem Laser. Beim Kollabieren werden Spalte zwischen den Bauteilen geschlossen. Das Verglasen beschreibt den Heißprozess zur Überführung von porösem Sootmaterial in dichtes Glas. Das Konsolidieren kann Verschmelzungs-, Verglasungs- und Kollabiervorgänge umfassen. Ergebnis ist thermisch verfestigtes, einfach zu handhabendes Halbzeug, wie etwa eine Vorform oder ein durch Verschmelzen fest gefügtes Bauteil-Ensemble.

### Positionsangaben: oben / unten

Die Angaben beziehen sich auf Positionen beim Elongierprozess beziehungsweise beim Faserziehprozess. "Unten" bezeichnet die Position in Ziehrichtung, "Oben" die Position entgegen der Ziehrichtung.

### Querschnitt

Den Schnitt senkrecht zur Längsrichtung/Längsachse.

### Längsschnitt

Einen Schnitt parallel zur Längsrichtung/Längsachse.

### Bohrung

Die Begriffe "Bohrung", "Mittenbohrung", "Innenbohrung" oder "Längsbohrung" bezeichnen Löcher mit zylinderförmiger aber ansonsten beliebiger Innengeometrie. Sie werden beispielsweise durch einen Bohrvorgang erzeugt oder sie entstehen, indem durch einen Abscheideprozess oder einen Pressvorgang auf der Außenmantel eines Dorns eine Materialschicht abgelagert wird und der Dorn anschließend entnommen wird.

### Achsenparallele Ausrichtung / Achsenparallelität

Bezugsachse ist jeweils die Längsachse des Halbzeugs, der Vorform oder die Mittelachse der Mehrkernfaser.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: einen Querschnitt eines Halbzeugs für die Herstellung einer Mehrkernfaser mit einem Mantelglas-Hohlzylinder, Kernstäben und einem Markerelement nach dem Stand der Technik,
- **Figur 2**: Bearbeitungsschritte (a) bis (d) bei einer ersten Verfahrensvariante zur Herstellung eines Targetstabs mit Markerelement zum Einsatz als Abscheidedorn bei einem Außenabscheideverfahren,
- **Figur 3**: Bearbeitungsschritte (a) und (b) bei einer zweiten Verfahrensvariante zur Herstellung eines Targetstabs mit Markerelement zum Einsatz als Abscheidedorn bei einem Außenabscheideverfahren,
- **Figur 4**: das Abscheiden einer Sootschicht auf dem Targetstab inklusive Markerelement von Figur 1,
- **Figur 5**: den Bauteil-Verbund auf Targetstab inklusive Markerelement und verglaster Sootschicht,
- **Figur 6**: einen Querschnitt des Bauteil-Verbunds von Figur 5 nach dem Erzeugen von Längsbohrungen,
- **Figur 7**: eine konsolidierte Vorform des Bauteil-Verbundes von Figur 6 mit in die Längsbohrungen eingesetzten und eingeschmolzenen Kernstäben, und
- **Figur 8**: eine weitere Ausführungsform einer konsolidierten Vorform im Querschnitt.

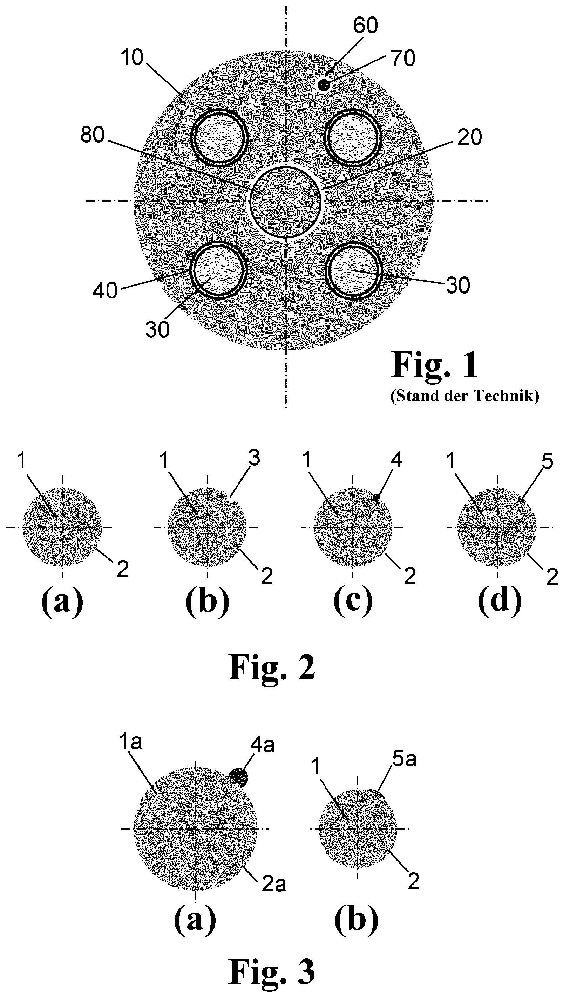

**Figur** 1 zeigt schematisch einen Querschnitt eines Hohlzylinders 10 aus einem Mantelglas nach dem Stand der Technik, der als Basiskörper für die Herstellung einer Mehrkernfaser dient. Der Hohlzylinder 10 wird in bekannter Weise anhand der OVD-Methode hergestellt. Bei diesem Verfahren werden SiO₂-Sootpartikel auf der Außenmantel eines um seine Längsachse rotierenden, zylinderförmigen Abscheidedorns aus der Gasphase abgeschieden, so dass sich auf dem Außenmantel des Abscheidedorns ein SiO₂-Sootkörper bildet. Nach Abschluss des Abscheideprozesses wird der Abscheidedorn entfernt, so dass eine Innenbohrung 20 zurückbleibt. Der SiO₂-Sootkörper wird anschließend unter Bildung des Hohlzylinders 10 verglast. In die Wandung des Hohlzylinders 10 werden vier Längsbohrungen 40 zur Aufnahme von jeweils einem Kernstab 30 sowie eine weitere, kleinere Längsbohrung 60 zur Aufnahme eines Markerstabes 70 eingebracht. Beim Konsolidieren dieses Bauteil-Ensembles wird in die Mittenbohrung 20 ein Füllstab 80 eingesetzt, der beispielsweise aus dem gleichen Material besteht wie das Hohlzylinder-Mantelglas.

Die Vielzahl der Längsbohrungen (40; 60) im Hohlzylinder-Mantelglas geht mit hohem Aufwand und Ausfallrisiko einher. Insbesondere beim Erzeugen der kleineren Längsbohrung 60 zur Aufnahme des Markerstabes 70 kann es leicht zu nicht akzeptablen Abweichungen von der Achsenparallelität und zu Rissen an der Bohrungs-Innenwand kommen, was zum Ausfall des aufwändig erzeugten Hohlzylinders 1 führen kann. Auch das Füllen und Kollabieren der Mittenbohrung 20 und die passgenaue Herstellung des Füllstabes 80 sind mit Aufwand und Ausfallrisiko verbunden und können leicht zu Maßabweichungen führen. Diese Nachteile vermeidet das erfindungsgemäße Verfahren, das im Folgenden anhand der Figuren 2 bis 8 erläutert wird.

**Figur 2** und **Figur 3** zeigen schematisch Verfahrensschritte zur Präparierung eines Targetstabs 1 mit einem Markerelement 5 beziehungsweise 5a.

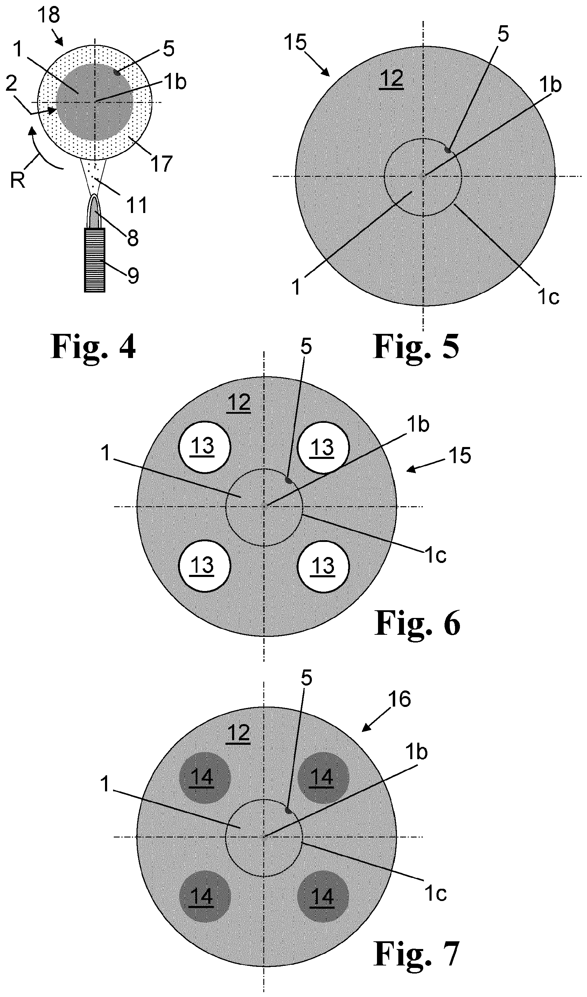

Der in **Figur 2a** schematisch gezeigte Targetstab 1 besteht aus synthetisch erzeugten, nicht-dotiertem Quarzglas, das im Handel unter der Bezeichnung F300 erhältlich ist. Für seine Herstellung sind die bekannten Methoden geeignet, wie beispielsweise VAD-Verfahren (Vapor Phase Axial Deposition), OVD-Verfahren (Outside Vapor Deposition) oder MCVD-Verfahren (Modified Chemical Vapor Deposition) oder Pulver-Pressverfahren. Er dient als Abscheidedorn bei einem OVD-Außenabscheideverfahren, das weiter unten anhand Figur 4 erläutert wird. Der Targetstab 1 hat eine Länge von etwa 1800mm und einen durch Rundschleifen auf etwa 42mm eingestellten Außendurchmesser. Durch das Rundschleifen werden etwaige Störungen des Außenmantels 2 und Biegungen beseitigt. Alternativ oder ergänzend wird die Durchmesseranpassung und Oberflächenverbesserung durch Elongieren in einem werkzeugfreien Elongierprozess erreicht.

**Figur 2b** zeigt, dass in den Außenmantel des Targetstabs 1 eine Längsnut 3 eingefräst worden ist. Die Längsnut 3 erstreckt sich über die gesamte Länge des Targetstabs 1. Sie hat U-Form mit einem abgerundeten Boden und geraden Seitenwänden. Ihre Öffnungsweite und die Tiefe betragen jeweils 6mm. Aus der Längsnut 3 kann in einem nachfolgenden Verfahrensschritt ein Hohlkanal erzeugt werden, der ein Markerelement im Sinne der Erfindung bildet.

**Figur 2c** zeigt die Längsnut 3 mit einem darin eingelegtem Markerstab 4. Der Markerstab 4 hat einen Durchmesser von 5mm. Er besteht aus synthetisch erzeugtem Quarzglas, das mit Fluor dotiert ist und im Handel unter der Bezeichnung F320 erhältlich ist. Sowohl die Viskosität als auch der Brechungsindex des Fluor-dotierten Quarzglases des Markerstabs 4 sind kleiner als beim undotierten Quarzglas, aus dem der Targetstab 1 besteht. Der Markerstab 4 wird erhalten, indem ein Ausgangszylinder aus dem F320-Quarzglas in einem werkzeugfreien Verfahren elongiert wird. Er hat eine glatte und im Schmelzfluss erzeugte Oberfläche und zeichnet sich durch eine hohe Maßhaltigkeit und Geradheit aus, so dass er sich ohne Schwierigkeiten und passgenau in die enge Längsnut 3 einlegen lässt.

Der in die Längsnut 3 eingelegte Markerstab 4 wird über seine gesamte Länge mittels eines Brenners erhitzt, so dass sich das Fluor-dotierte Quarzglas infolge seiner vergleichsweise geringen Viskosität erweicht und verformt. **Figur 2d** zeigt die daraus resultierende Markerglasmasse 5 nach dem Erweichen, Verformen und Verschmelzen mit dem Targetstab 1. Das Glasvolumen des ehemaligen Markerstabs 4 ist auf das Innenvolumen der Längsnut 3 so abgestimmt, dass die Markerglasmasse 5 die Längsnut 3 gerade vollständig ausfüllt.

Bei der in **Figur 3** gezeigten alternativen Verfahrensweise, wird zum einen auf die Erzeugung einer Längsnut verzichtet und zum anderen wird der Verbund aus Targetstab 1 und Markerelement 5a anhand eines vorgeschalteten Elongierprozesses erzeugt. Ausgangs- oder Vorprodukt für den Elongierprozess ist einerseits ein Targetstab-Ausgangszylinder 1a aus undotiertem Quarzglas (F300) mit einem Durchmesser von 63mm und einer Länge von 800mm und ein nicht-runder Ausgangs-Markerstab 4a, bei dem ein peripherer Abschnitt des Außenmantels im Querschnitt eben oder leicht konkav (nach innen gebogen) ist, wie dies in **Figur 3a** angedeutet ist. Der Ausgangs-Markerstab 4a besteht aus einem mit Fluor dotierten Quarzglas (F320) und hat einen Durchmesser von 8mm. Der Ausgangs-Markerstab 4a wird in paralleler Achsenausrichtung mit dem Ausgangs-Targetstab 1a verschmolzen, wobei der erwähnte periphere Abschnitt auf dessen Außenmantel 2a aufliegt. Beim Elongieren wird der Verbund aus Ausgangs-Targetstab 1a und -Markerstab 4a auf eine Länge von 1800mm langezogen. Dabei verschmelzen die Ausgangszylinder (1a; 4a) weiter miteinander und das niedriger viskose Quarzglas des Markerstabes 4a fließt auf der Targetstab-Mantelfläche 2 leicht aus und bildet nach dem Abkühlen einen flachen Glaswulst 5a, der mit dem Außenmantel 2 des Targetstabs 1 fest verbunden ist. Dies zeigt schematisch die **Figur 3b****.** Der Elongierprozess bewirkt zum einen das Herunterskalieren etwaiger Geometriefehler und Maßabweichungen in den Ausgangszylindern (1a; 4a) und zum anderen richtet es den finalen Schmelzverbund (1; 5a) geradeaus.

**Figur 4** zeigt schematisch den Einsatz des so präparierten und mit der Markerglasmasse 5 gefüllten Targetstabs 1 als Abscheidedorn in einem OVD-Außenabscheideverfahren. Dabei wird ein hochreines SiO₂-Ausgangsmaterial, beispielsweise Siliciumtetrachlorid, einem Abscheidebrenner 9 und einer Brennerflamme 8 zugeführt, in der es zu festen SiO₂-Partikeln 11 umgesetzt wird. Diese SiO₂-Partikel 11 werden auf dem Außenmantel 2 des um seine Längsachse 1b rotierenden (Richtungspfeil R), präparierten Targetstabs 1 aus der Gasphase abgeschieden, wobei der Abscheidebrenner 9 eine reversierende Hin- und Herbewegung entlang der Targetstab-Längsachse 1b ausführt (diese verläuft in der Querschnitts-Darstellung von Figur 4 senkrecht zur Blattebene). Auf dem Außenmantel 2 des Targetstabs 1 bildet sich eine SiO₂-Sootschicht 17. Das nach Abschluss des OVD-Außenabscheideverfahrens erhaltene Zwischenprodukt 18 umfasst einen zylinderförmigen Fügeverbund aus dem Targetstab 1, der Markerglasmasse 5 und der SiO₂-Sootschicht 17, die den Targetstab 1 und die Markerglasmasse 5 umgibt.

Das Zwischenprodukt 17 wird einer Dehydratationsbehandlung in chlorhaltiger Atmosphäre bei einer Temperatur von 850°C unterzogen und unmittelbar danach wird die SiO₂-Sootschicht 17 unter Vakuum bei einer Temperatur von 1450°C verglast.

**Figur 5** zeigt den danach erhaltenen Verbund 15 aus Targetstab 1 inklusive der Markerglasmasse 5 und dem nach dem Konsolidieren der SiO₂-Sootschicht erhaltenen Mantelglasbereich 12 aus undotiertem, synthetisch erzeugtem Quarzglas. Die gestrichelte Kreislinie 12c gibt den Umfang des Targetstabs 1 wieder. Der Außendurchmesser des Verbunds 15 wird durch Außenrundschleifen auf einen Wert von 200mm eingestellt. Der Mantelglasbereich 12 erstreckt sich entlang des Außenmantels 2 des Targetstabs 1 und hat abzüglich abgerundeter Endkappen eine nutzbare Länge von etwa 1500mm.

**Figur 6** zeigt den Verbund 15 aus Mantelglasschicht 12 und präpariertem Targetstab 1 nachdem in den Mantelglasbereich 12 vier Bohrungen 13 in einer vorbestimmten (hier quadratischen) Konfiguration durch mechanisches Bohren in Richtung der Targetstab-Längsachse 1b erzeugt worden sind. Die Bohrungen 13 dienen zur Aufnahme von Kernstäben 14 (Figur 7) und haben einen Durchmesser von 30mm. Die Bohrungen 13 erstrecken sich durch die gesamte nutzbare Länge des Mantelglasbereichs 12 (Durchgangsbohrungen). Bei einer alternativen Ausführungsform sind die Bohrungen als Sacklochbohrungen ausgeführt.

Außerdem werden vier Kernstäbe 14 aus Germanium-dotiertem Quarzglas mit einer Länge von etwa 1500mm und einem Außendurchmesser von etwa 28mm hergestellt. Dafür sind ebenfalls bekannte Techniken geeignet, beispielsweise das MCVD-Verfahren (Modified Chemical Vapor Deposition)..

Die Kernstäbe 14 werden in die Bohrungen 12 eingesetzt. Anschließend wird das Bauteil-Ensemble aus dem Verbund 15 und den Kernstäben 14 erhitzt, so dass sich die Ringspalte um die Kernstäbe 14 schließen und alle Bauteile des Ensembles miteinander verschmolzen werden. **Figur 7** zeigt schematisch die so konsolidierte Vorform 16, die sich aus dem Verbund 15 von Targetstab 1, Markerglasmasse 5 und Mantelglasbereich 12 sowie den Kernstäben 14 zusammensetzt.

Die konsolidierte Vorform 16 wird anschließend zu einer sekundären Vorform elongiert. Dabei wird die Vorform 16 in einer Elongier-Vorrichtung mittels eines Halters in vertikaler Ausrichtung der Targetstab-Längsachse 1b gehalten. Die so erzeugte sekundäre Vorform wird abschließend in üblicher Weise in einer Ziehvorrichtung zu einer Mehrkernfaser gezogen.

Das Markerelement liegt bei diesem Ausführungsbeispiel als Markerglasmasse 5 vor, die durch Umformung des ursprünglichen Markerstabes 4 innerhalb der Längsrille 3 erzeugt worden ist. Bei einer alternativen Verfahrensweise ist in die Längsrille 3 beim Außenabscheideverfahren eine Kapillare eingelegt. Bei den nachfolgenden Konsolidierungsvorgängen wird das vollständige Kollabieren der Kapillare verhindert, indem in ihr ein Überdruck erzeugt und aufrechterhalten wird. Auf diese Weise wird ein Hohlraum erzeugt, der sich entlang der Längsachse 1b erstreckt, und der in der Mehrkernfaser als luftgefüllter Hohlkanal vorliegt. Der Hohlkanal kann als Markerzone dienen, da sich der Brechungsindex von Luft deutlich von dem des Mantelglases unterscheidet.

Der Querschnitt der Mehrkernfaser entspricht abgesehen von den kleineren radialen Abmessungen im Wesentlichen dem Querschnitt der konsolidierten Vorform 16. Die Kernglasbereiche (14) der ehemaligen Kernstäbe bilden Signalkerne, die sich längs der Faser-Längsachse erstrecken; der ehemalige Targetstab (1) bildet einen Teil des Mantelglasbereichs, und das ehemalige Markerelement (5) bildet eine visuell leicht erkennbare Markerzone. Die Markerzone (5) zeichnet sich durch eine geringe Größe aus, so dass sie der Mehrkernfaser beim Faserziehprozess eine geringe Spannung aufprägt und sich demzufolge ein geringes Faser-Curl einstellt.

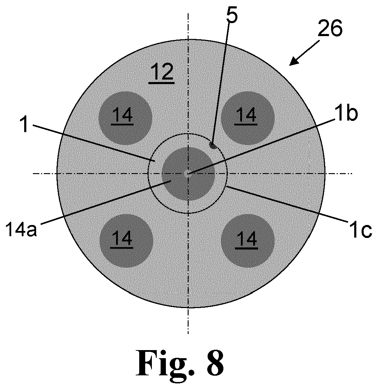

Im Unterschied zu Figur 7 ist bei der in **Figur 8** gezeigten Ausführungsform einer konsolidierten Vorform 26 für eine Mehrkernfaser auch das Zentrums des Targetstabs 1 mit einem Kernstab 14a besetzt. Die Bohrung für die Aufnahme des Kernstabs 14a wird in und entlang der Targetstab-Längsachse 1b und in einem Arbeitsgang mit den übrigen Kernstab-Bohrungen 13 (Figur 6) nach dem Verglasen der Sootschicht erzeugt. Der Durchmesser aller Kernstäbe 14, 14a ist gleich. Der ehemalige Targetstab 1 weist demnach einen Kernglasbereich auf der von einem Mantelglasbereich umgeben ist, an den wiederum die Markerzone 5 angrenzt.

## Patentansprüche

1. Verfahren zur Herstellung einer Mehrkernfaser mit einer Markerzone oder einer Vorform für eine derartige Mehrkernfaser, umfassend die Bildung eines Halbzeugs (16; 26), das einen Mantelglasbereich (12) aus einem Mantelglas mit mehreren darin eingebetteten Kernglasbereichen (14; 14a) aus einem Kernglas und mindestens ein Markerelement (5) aufweist, wobei durch Elongieren des Halbzeugs (16; 26) die Mehrkernfaser beziehungsweise die Vorform erhalten wird, und wobei das Erzeugen des Mantelglasbereichs (12) einen Verfahrensschritt umfasst, bei dem anhand eines Außenabscheideverfahrens auf einem Außenmantel (2; 2a) eines eine Targetstab-Längsachse (1b) aufweisenden Targetstabs (1) eine Mantelmaterialschicht (17) abgeschieden wird, wobei der Targetstab (1) einen sich entlang der Targetstab-Längsachse (1b) erstreckenden ersten Glasbereich aufweist, und wobei das Halbzeug (26) die Mantelmaterialschicht (17) und den Targetstab (1) umfasst, **dadurch gekennzeichnet, dass** der Targetstab (1) außerdem einen sich entlang der Targetstab-Längsachse (1b) erstreckenden und an den ersten Glasbereich angrenzenden Markerbereich aufweist, der das Markerelement (5) enthält oder der einen Hohlkanal bereitstellt, der entweder das Markerelement (5) bildet oder der zur Aufnahme des Markerelements (5) ausgelegt ist,.

2. Verfahren nach Anspruch 1, **dadurch gekennzeichnet, dass** der Markerbereich zwischen dem ersten Glasbereich und dem Mantelglasbereich (12) angeordnet wird.

3. Verfahren nach Anspruch 1 oder 2, **dadurch gekennzeichnet, dass** das Markerelement (5) mindestens ein zylinderförmiges Bauteil (4) oder eine mit dem Targetstab verbundene Schicht (4a) oder Masse (4a) bildet.

4. Verfahren nach Anspruch 3, **dadurch gekennzeichnet, dass** der Targetstab (1) eine sich entlang der Targetstab-Längsachse (1b) erstreckende Ausnehmung (3) aufweist, die das Markerelement bildet oder in der das Markerelement (5) angeordnet ist.

5. Verfahren nach Anspruch 4, **dadurch gekennzeichnet, dass** die Ausnehmung (3) eine Längsrille im Außenmantel (2) des Targetstabs (1) umfasst.

6. Verfahren nach einem der Ansprüche 3 bis 5, **dadurch gekennzeichnet, dass** das Markerelement (5) vor Durchführung des Außenabscheideverfahren am Targetstab (1) angebracht wird.

7. Verfahren nach einem oder mehreren der vorhergehenden Ansprüche, **dadurch gekennzeichnet, dass** die anhand des Außenabscheideverfahrens erzeugte Mantelmaterialschicht (12; 17) als Sootschicht (17) auf Basis von SiO₂ ausgebildet wird.

8. Verfahren nach Anspruch 7, **dadurch gekennzeichnet, dass** die Sootschicht (17) durch Erhitzen auf eine Verglasungstemperatur verglast wird.

9. Verfahren nach Anspruch 8, **dadurch gekennzeichnet, dass** die Sootschicht (17) vor dem Verglasen einer Dotierungsbehandlung in einer mindestens einen Dotierstoff enthaltenden Atmosphäre und/oder einer Dehydratationsbehandlung in halogenhaltiger Atmosphäre oder unter Vakuum unterzogen wird.

10. Verfahren nach Anspruch 7 oder 8, **dadurch gekennzeichnet, dass** nach dem Verglasen der Sootschicht (17) Kernstab-Bohrungen (13) zur Aufnahme von Kernglasstäben (14; 14a) erzeugt werden.

11. Verfahren nach einem oder mehreren der vorhergehenden Ansprüche, **dadurch gekennzeichnet, dass** das Markerelement (5) als Hohlkanal ausgeführt ist oder dass es ein Markermaterial enthält, das sich in mindestens einer physikalischen und/oder chemischen Eigenschaft vom angrenzenden Mantelglas und/oder vom angrenzenden ersten Glasbereich des Targetstabs (1) unterscheidet, wobei die Eigenschaft ausgewählt ist aus: Brechungsindex, Farbe, Fluoreszenz und/oder spezifischer Glasdichte.

12. Verfahren nach einem oder mehreren der vorhergehenden Ansprüche, **dadurch gekennzeichnet, dass** die Herstellung des Halbzeugs folgende Verfahrensschritte umfasst:
(a) Bereitstellen des den Markerbereich aufweisenden Targetstabs (1),
(b) Bereitstellen mehrerer Kernstäbe (14; 14a), die ein Kernglas enthalten,
(c) Abscheiden der Mantelmaterialschicht (12; 17) auf dem Außenmantel (2) des Targetstabs (1) anhand des Außenabscheideverfahrens,
(d) Erzeugen von Kernstab-Bohrungen (13) mindestens in der Mantelmaterialschicht (12; 17) und optional im ersten Glasbereich des Targetstabs (1), und
(e) Einsetzen der Kernstäbe in die Kernstab-Bohrungen.

13. Verfahren nach Anspruch 12, **dadurch gekennzeichnet, dass** der Markerbereich als Hohlkanal ausgebildet ist, und dass vor oder nach dem Einsetzen der Kernstäbe ein zylinderförmiges Markerelement in den Hohlkanal eingefügt wird.

14. Zwischenprodukt zur Herstellung einer Mehrkernfaser oder einer Vorform dafür, umfassend einen Targetstab (1) aus Glas, ein Markerelement (5) und eine SiO₂-Soot enthaltende Mantelmaterialschicht (17), die den Targetstab (1) und das Markerelement (5) umgibt und die mit dem Targetstab (1) reib-, form- und/oder stoffschlüssig verbunden ist, **dadurch gekennzeichnet, dass** das Markerelement (5) an oder in dem Targetstab (1) ausgebildet ist.

15. Zwischenprodukt nach Anspruch 14, **dadurch gekennzeichnet, dass** der Targetstab (1) einen ersten Glasbereich aufweist, an den das Markerelement (5) angrenzt, wobei das Markerelement (5) vorzugsweise zwischen dem ersten Glasbereich und der Mantelmaterialschicht (17) angeordnet ist und ganz bevorzugt eine Ausnehmung (3) in einem Außenmantel (2) des Targetstabs (1) mindestens teilweise ausfüllt.

## Claims

1. A method for producing a multi-core fiber with a marker zone or a preform for such a multi-core fiber, comprising the formation of a semi-finished product (16; 26) which comprises a glass cladding region (12) made of a cladding glass with a plurality of core glass regions (14; 14a) made of a core glass embedded therein, and at least one marker element (5), the multi-core fiber or the preform being obtained by elongation of the semi-finished product (16; 26), and the production of the glass cladding region (12) comprising a method step in which a cladding material layer (17) is deposited on an outer surface (2; 2a) of a target rod (1) having a target rod longitudinal axis (1b) using an outside deposition method, the target rod (1) comprising a first glass region extending along the target rod longitudinal axis (1b), and the semi-finished product (26) comprising the cladding material layer (17) and the target rod (1), **characterized in that** the target rod (1) also comprises a marker region extending along the target rod longitudinal axis (1b) and adjacent to the first glass region, which marker region contains the marker element (5) or provides a hollow channel which either forms the marker element (5) or is designed to receive the marker element (5).

2. The method according to claim 1, **characterized in that** the marker region is arranged between the first glass region and the glass cladding region (12).

3. The method according to claim 1 or 2, **characterized in that** the marker element (5) forms at least one cylindrical component (4) or a layer (4a) or mass (4a) connected to the target rod.

4. The method according to claim 3, **characterized in that** the target rod (1) comprises a recess (3) extending along the target rod longitudinal axis (1b), which recess forms the marker element or in which recess the marker element (5) is arranged.

5. The method according to claim 4, **characterized in that** the recess (3) comprises a longitudinal groove in the outer surface (2) of the target rod (1).

6. The method according to one of claims 3 to 5, **characterized in that** the marker element (5) is attached to the target rod (1) before the outside deposition method is carried out.

7. The method according to one or more of the preceding claims, **characterized in that** the cladding material layer (12; 17) produced using the outside deposition method is formed as a soot layer (17) based on SiO₂.

8. The method according to claim 7, **characterized in that** the soot layer (17) is vitrified by heating to a vitrification temperature.

9. The method according to claim 8, **characterized in that,** prior to vitrification, the soot layer (17) is subjected to a doping treatment in an atmosphere containing at least one dopant and/or to a dehydration treatment in a halogen-containing atmosphere or under vacuum.

10. The method according to claim 7 or 8, **characterized in that** core rod bores (13) for receiving core glass rods (14; 14a) are produced after the soot layer (17) is vitrified.

11. The method according to one or more of the preceding claims, **characterized in that** the marker element (5) is designed as a hollow channel, **or in that** it contains a marker material which differs from the adjacent cladding glass and/or from the adjacent first glass region of the target rod (1) in at least one physical and/or chemical property, the property being selected from: refractive index, color, fluorescence, and/or specific glass density.

12. The method according to one or more of the preceding claims, **characterized in that** the production of the semi-finished product comprises the following method steps:
(a) providing the target rod (1) comprising the marker region,
(b) providing a plurality of core rods (14; 14a) containing a core glass,
(c) depositing the cladding material layer (12; 17) on the outer surface (2) of the target rod (1) using the outside deposition method,
(d) producing core rod bores (13) at least in the cladding material layer (12; 17) and optionally in the first glass region of the target rod (1), and
(e) inserting the core rods into the core rod bores.

13. The method according to claim 12, **characterized in that** the marker region is designed as a hollow channel, **and in that** a cylindrical marker element is added into the hollow channel before or after the core rods are inserted.

14. An intermediate product for producing a multi-core fiber or a preform for same, comprising a target rod (1) made of glass, a marker element (5), and a cladding material layer (17) which contains SiO₂ soot, surrounds the target rod (1) and the marker element (5) and is frictionally, form-fittingly and/or integrally connected to the target rod (1), **characterized in that** the marker element (5) is formed on or in the target rod (1).

15. The intermediate product according to claim 14, **characterized in that** the target rod (1) comprises a first glass region which is adjacent to the marker element (5), the marker element (5) preferably being arranged between the first glass region and the cladding material layer (17) and very preferably at least partially filling a recess (3) in an outer surface (2) of the target rod (1).

## Revendications

1. Procédé pour la fabrication d'une fibre multicœur comportant une zone de marquage ou d'une préforme pour une telle fibre multicœur, comprenant la formation d'un demi-produit (16 ; 26) présentant une zone de gaine en verre (12) constituée d'un verre pour gaine comportant plusieurs zones de cœur en verre (14 ; 14a) incorporées dans celui-ci et constituées d'un verre pour cœur et au moins un élément de marquage (5), dans lequel la fibre multicœur ou la préforme est obtenue par allongement du demi-produit (16 ; 26), et dans lequel la production de la zone de gaine en verre (12) comprend une étape de procédé lors de laquelle une couche de matériau de gaine (17) est déposée, à l'aide d'un procédé de dépôt extérieur, sur une gaine extérieure (2 ; 2a) d'une tige cible (1) présentant un axe longitudinal de tige cible (1b), dans lequel la tige cible (1) présente une première zone en verre s'étendant le long de l'axe longitudinal de tige cible (1b), et dans lequel le demi-produit (26) comprend la couche de matériau de gaine (17) et la tige cible (1), **caractérisé en ce que** la tige cible (1) présente en outre une zone de marquage s'étendant le long de l'axe longitudinal de tige cible (1b) et adjacente à la première zone en verre, laquelle zone de marquage contient l'élément de marquage (5) ou fournit un canal creux qui soit forme l'élément de marquage (5), soit est conçu pour recevoir l'élément de marquage (5).

2. Procédé selon la revendication 1, **caractérisé en ce que** la zone de marquage est disposée entre la première zone en verre et la zone de gaine en verre (12).

3. Procédé selon la revendication 1 ou 2, **caractérisé en ce que** l'élément de marquage (5) forme au moins un composant cylindrique (4) ou une couche (4a) ou masse (4a) reliée à la tige cible.

4. Procédé selon la revendication 3, **caractérisé en ce que** la tige cible (1) présente un évidement (3) s'étendant le long de l'axe longitudinal de tige cible (1b) et formant l'élément de marquage ou dans lequel est disposé l'élément de marquage (5).

5. Procédé selon la revendication 4, **caractérisé en ce que** l'évidement (3) comprend une rainure longitudinale dans la gaine extérieure (2) de la tige cible (1).

6. Procédé selon l'une des revendications 3 à 5, **caractérisé en ce que** l'élément de marquage (5) est apposé sur la tige cible (1) avant la mise en œuvre du procédé de dépôt extérieur.

7. Procédé selon une ou plusieurs des revendications précédentes, **caractérisé en ce que** la couche de matériau de gaine (12 ; 17) produite à l'aide du procédé de dépôt extérieur est réalisée sous forme de couche de suie (17) à base de SiO₂.

8. Procédé selon la revendication 7, **caractérisé en ce que** la couche de suie (17) est vitrifiée par chauffage à une température de vitrification.

9. Procédé selon la revendication 8, **caractérisé en ce que** la couche de suie (17) est soumise, avant vitrification, à un traitement de dopage dans une atmosphère contenant au moins un dopant et/ou à un traitement de déshydratation dans une atmosphère contenant un halogène ou sous vide.

10. Procédé selon la revendication 7 ou 8, **caractérisé en ce que,** après la vitrification de la couche de suie (17), des alésages de tige de cœur (13) sont produits pour recevoir des tiges de cœur en verre (14 ; 14a).

11. Procédé selon une ou plusieurs des revendications précédentes, **caractérisé en ce que** l'élément de marquage (5) est réalisé sous forme de canal creux **ou en ce qu'**il contient un matériau de marquage qui se distingue par au moins une propriété physique et/ou chimique du verre de gaine adjacent et/ou de la première zone en verre adjacente de la tige cible (1), dans lequel la propriété est choisie parmi : indice de réfraction, couleur, fluorescence et/ou densité de verre spécifique.

12. Procédé selon une ou plusieurs des revendications précédentes, **caractérisé en ce que** la fabrication du demi-produit comprend les étapes de procédé suivantes :
(a) fourniture de la tige cible (1) présentant la zone de marquage,
(b) fourniture de plusieurs tiges de cœur (14 ; 14a) contenant un verre pour cœur,
(c) dépôt de la couche de matériau de gaine (12 ; 17) sur la gaine extérieure (2) de la tige cible (1) à l'aide du procédé de dépôt extérieur,
(d) production d'alésages de tige de cœur (13) au moins dans la couche de matériau de gaine (12 ; 17) et éventuellement dans la première zone en verre de la tige cible (1), et
(e) insertion des tiges de cœur dans les alésages de tige de cœur.

13. Procédé selon la revendication 12, **caractérisé en ce que** la zone de marquage est réalisée sous forme de canal creux, **et en ce qu'**un élément de marquage cylindrique est introduit dans le canal creux avant ou après l'insertion des tiges de cœur.

14. Produit intermédiaire pour la fabrication d'une fibre multicœur ou d'une préforme pour celle-ci, comprenant une tige cible (1) en verre, un élément de marquage (5) et une couche de matériau de gaine (17) contenant de la suie SiO₂, entourant la tige cible (1) et l'élément de marquage (5) et reliée à la tige cible (1) par friction, par complémentarité de forme et/ou par liaison de matière, **caractérisé en ce que** l'élément de marquage (5) est réalisé sur la tige cible (1) ou dans celle-ci.

15. Produit intermédiaire selon la revendication 14, **caractérisé en ce que** la tige cible (1) présente une première zone en verre à laquelle l'élément de marquage (5) est adjacent, dans lequel l'élément de marquage (5) est de préférence disposé entre la première zone en verre et la couche de matériau de gaine (17) et remplit de manière particulièrement préférée au moins partiellement un évidement (3) dans une gaine extérieure (2) de la tige cible (1).
